(19) Europäisches Patentamt
European Patent Office
Office européen des brevets

(11) **EP 1 647 676 B1**

(12) **EUROPÄISCHE PATENTSCHRIFT**

(45) Veröffentlichungstag und Bekanntmachung des Hinweises auf die Patenterteilung:
**27.03.2013   Patentblatt 2013/13**

(51) Int Cl.:
*F01K 13/00* *(2006.01)*          *G05B 17/02* *(2006.01)*

(21) Anmeldenummer: **04024323.0**

(22) Anmeldetag: **12.10.2004**

(54) **Verfahren zur Simulation des Betriebsverhaltens einer Dampfturbinenanlage**

Method for simulating the operating characteristics of a steam turbine plant

Méthode pour simuler les caractéristiques de fonctionnement d'une installation de turbine à vapeur

(84) Benannte Vertragsstaaten:
**CH DE GB IT LI**

(43) Veröffentlichungstag der Anmeldung:
**19.04.2006   Patentblatt 2006/16**

(73) Patentinhaber: **Siemens Aktiengesellschaft**
**80333 München (DE)**

(72) Erfinder:
 • **Rothe, Klaus**
 **46459 Rees (DE)**
 • **Zimmer, Gerta, Dr.**
 **45468 Mülheim an der Ruhr (DE)**

(56) Entgegenhaltungen:
 **EP-A- 0 100 532**          **EP-A- 0 684 366**
 **DE-A1- 19 904 974**      **US-A- 5 347 466**
 **US-A1- 2004 073 409**

 • NIU Z ET AL: "Adaptive simulation of boiler unit performance" ENERGY CONVERSION AND MANAGEMENT, ELSEVIER SCIENCE PUBLISHERS, OXFORD, GB, Bd. 39, Nr. 13, 1. September 1998 (1998-09-01), Seiten 1383-1394, XP004123264 ISSN: 0196-8904
 • SCHAEFER J ET AL: "MATHEMATISCHE MODELLIERUNG EINES DAMPFERZEUGERS MIT ZIRKULIERENDER WIRBELSCHICHT UNTER DER ZIELSETZUNG EINER ECHTZEITSIMULATION" VGB KRAFTWERKSTECHNIK, VGB KRAFTWERKSTECHNIK GMBH. ESSEN, DE, Bd. 79, Nr. 8, 1999, Seiten 48-53, XP000847463 ISSN: 0372-5715

**Beschreibung**

Die Erfindung bezieht sich auf ein Verfahren zur Simulation des Betriebsverhaltens einer Dampfturbinenanlage.

Ein derartiges Verfahren ist zum Beispiel in Dokument US 2004/0073409A1 beschrieben.

Ein derartiges Simulationsverfahren wird häufig im Zuge der Konzeption einer Dampfturbinenanlage herangezogen, um bereits vor der Konstruktion der realen, physikalischen Anlagenbestandteile das Betriebsverhalten der zu konstruierenden Anlage abschätzen zu können. Die Simulation dient hierbei insbesondere für eine verbesserte Auslegung bzw. Optimierung der Anlage oder einzelner Anlagebestandteile, zur Früherkennung etwaiger Konzeptionsfehler, etc.

Ein derartiges Simulationsverfahren wird des Weiteren eingesetzt, um gefahrlos das Betriebsverhalten einer Dampfturbinenanlage in einem außergewöhnlichen Betriebszustand, insbesondere beim schnellen Anfahren der Anlage oder bei Störfällen, zu testen.

Bisher wird die dynamische Simulation einer Dampfturbinenanlage meistens durch Abbildung der zu simulierenden Anlage auf eine Anzahl von hydrodynamischen Speicher-Drossel-Elementen durchgeführt. Eine hinreichend präzise Modellierung des Massenstroms und des Druckverlaufs innerhalb der Anlage ist bei Anwendung eines solchen Modells in der Regel jedoch nur in der Nähe des untersuchten Arbeitspunktes möglich. Dagegen wird die reale Anlage um so unpräziser abgebildet, je weiter der Betriebszustand von dem untersuchten Arbeitspunkt entfernt ist. Der Temperaturverlauf innerhalb der Anlage lässt sich mit diesem Ansatz nicht nachbilden, ebenso wenig das Verhalten der Anlage bei einem Phasenübergang des Arbeitsfluids.

Der Erfindung liegt die Aufgabe zu Grunde, ein unter den vorstehend genannten Aspekten verbessertes Verfahren zur Simulation des Betriebsverhaltens einer Dampfturbinenanlage anzugeben.

Diese Aufgabe wird erfindungsgemäß gelöst durch die Merkmale des Anspruchs 1. Danach wird eine reale (bereits bestehende oder geplante) Dampfturbinenanlage, nachfolgend kurz als Anlage bezeichnet, zunächst durch ein Simulationsmodell abgebildet. Hierzu wird die Anlage in eine Anzahl von Anlagenelemente gegliedert, die jeweils eine funktionale Einheit entlang eines Fluidpfades der Anlage darstellen. Insbesondere wird jede Rohrleitung, jedes Ventil und jeder Turbinenabschnitt der zu simulierenden Anlage als separates Anlagenelement definiert. Weiterhin werden der Anlage ein oder mehrere Referenzvolumina zugeordnet, so dass zwei aneinander angrenzenden Anlagenelementen mindestens ein Referenzvolumen zwischengeordnet ist.

Jedem Referenzvolumen der realen Dampfturbinenanlage wird nun ein Speicherelement des Simulationsmodells zugeordnet, für das zu jedem Simulationszeitpunkt ein Masseninhalt, ein Energieinhalt sowie ein definierter thermodynamischer Zustand berechnet werden kann. Ebenso wird jedem Anlagenelement der realen Dampfturbinenanlage seitens des Simulationsmodells eine für das Anlagenelement spezifische Durchflussfunktion zugeordnet, die in Abhängigkeit (thermodynamischer) Eingangszustände einen Massenstrom und Enthalpiewerte an den Rändern des Anlagenelements, insbesondere eine ggf. durch das Anlagenelement verursachte Enthalpieänderung berechnet.

Der (thermodynamische) Zustand eines Speicherelements wird dabei definiert durch ein vorgegebenes Set thermodynamischer Größen, z.B. Druck, Temperatur, Dichte, etc. Der Zustand definiert zeitabhängig den Wert dieser Größen für das zugeordnete Speicherelement.

Im Zuge einer Simulationsphase ist nun verfahrensgemäß vorgesehen, für jedes Speicherelement ausgehend von vorgegebenen Anfangsbedingungen anhand der Durchflussfunktionen insbesondere iterativ die Masse und den Energieinhalt eines jeden Speicherelements zu berechnen und hieraus einen dem Speicherelement zugeordneten Ausgabezustand abzuleiten.

Die einem Speicherelement zugeordnete absolute innere Energie ist gemäß der physikalischen Definition dieses Begriffs als Summe der thermischen Energie der in dem Speicherelement enthaltenen Masse gegeben. Anstelle des Absolutbetrages der inneren Energie kann äquivalenterweise die spezifische innere Energie, d.h. die innere Energie pro Masseneinheit, ferner ggf. auch die innere Energie pro Mol, etc., herangezogen werden.

Als definierende Größen für den Zustand eines Speicherelements sind insbesondere die Größen Druck, Enthalpie und spezifisches Volumen vorgesehen. Als äquivalent zu der Angabe des spezifischen Volumens wird die Angabe der Dichte verstanden, die sich aus dem Kehrwert des spezifischen Volumens ergibt. Es sei hierbei angemerkt, dass an sich durch ein vorgegebenes Wertepaar für zwei dieser Größen ein thermodynamischer Zustand im strengen physikalischen Sinn bereits eindeutig definiert ist, dass also der Wert der jeweils dritten Größe durch ein solches Wertepaar festgelegt ist. Die anmeldungsgemäß redundante Definition eines thermodynamischen Zustands durch Druck, Enthalpie und spezifisches Volumen erfolgt insbesondere zur Reduzierung des mit der Simulation verbundenen Rechenaufwands. Indem der Druck stets wiederum in Abhängigkeit von Enthalpie und spezifischem Volumen bestimmt wird, wird sichergestellt, dass nur physikalisch sinnvolle Zustände berücksichtigt werden.

Zur Berechnung des einem thermodynamischen Zustand zugeordneten Drucks sowie gegebenenfalls weiterer thermodynamischer Zustandsgrößen wird bevorzugt eine Wasserdampftafel, insbesondere nach dem Industriestandard IAPWS-IF97, herangezogen. Der Begriff Wasserdampftafel bezeichnet ein Kennlinienwerk, in welchem für Wasserdampf die gegenseitige Abhängigkeit thermodynamischer Zustandsgrößen, insbesondere Druck p, Temperatur T, spezifisches Volumen v (bzw. Dichte p), Isentropenexponent κ und Enthalpie h, für eine Vielzahl von Zuständen aufgelistet ist. Die Verwendung der Wasserdampftafel im Zuge des Simulationsverfahrens hat insbesondere den Vorteil, dass bei Kenntnis der verfahrensgemäß berechneten inneren Energie und des Masseninhalts eines Speicherelements alle weiteren Zustandsgrößen wie z.B. Druck, Temperatur, Isentropenexponent, etc. einfach abgeleitet werden können.

Um insbesondere auch komplexere Betriebsabläufe realitätsnah simulieren zu können, umfasst die Simulationsphase bevorzugt mehrere iterativ nacheinander ausgeführte Simulationsschritte, wobei im Zuge eines jeden Simulationsschrittes für jedes Speicherelement ein Ausgabezustand berechnet wird, der wiederum als Anfangsbedingung eines nachfolgend ausgeführten Iterationsschrittes herangezogen wird.

Weitere Ausbildungen und Vorteile der Erfindung ergeben sich aus dem nachfolgenden Beschreibungsteil, in welchem ein Ausführungsbeispiel der Erfindung anhand einer Zeichnung näher erläutert ist. Darin zeigen:

FIG 1    in schematischer Darstellung eine zu simulierende Dampfturbinenanlage mit einem Ventil, einem Turbinenabschnitt und einer Rohrleitung als hintereinander geschaltete Anlagenelemente sowie zwei den Anlagenelementen jeweils zwischengeschalteten Referenzvolumina,

FIG 2    in einem Blockschaltbild ein der Dampfturbinenanlage gemäß FIG 1 entsprechendes Simulationsmodell mit zwei jeweils einem Referenzvolumen entsprechenden Speicherelementen sowie jeweils einer dem Ventil, dem Turbinenabschnitt bzw. der Rohrleitung entsprechenden Durchflussfunktion,

FIG 3    in einem Blockschaltbild die Struktur eines Speicherelements gemäß FIG 2,

FIG 4    in einem Blockschaltbild die der Rohrleitung gemäß FIG 1 entsprechende dritte Durchflussfunktion gemäß FIG 2,

FIG 5    in einem Blockschaltbild die dem Turbinenabschnitt gemäß FIG 1 entsprechende zweite Durchflussfunktion gemäß FIG 2 und

FIG 6    in einem Blockschaltbild die dem Ventil gemäß FIG 1 entsprechende erste Durchflussfunktion gemäß FIG 2.

Einander entsprechende Teile und Größen sind in allen Figuren steht mit den gleichen Bezugszeichen versehen. Nachfolgend verwendete mathematische Funktionen und in den Figuren verwendete Symbole sind in TAB 1 und 2 näher erläutert.

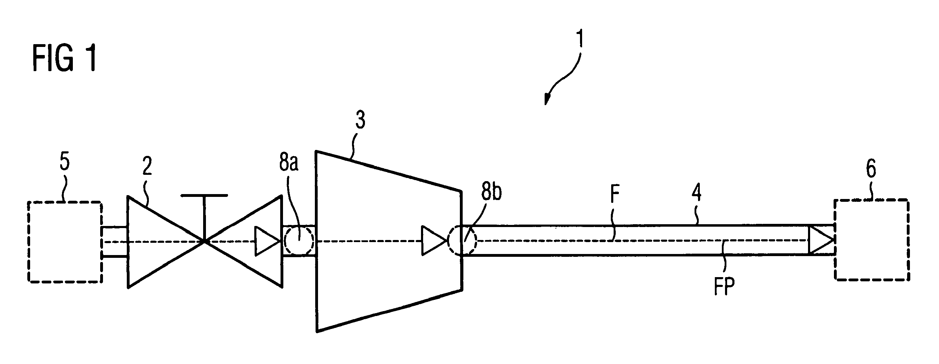

FIG 1 zeigt in grober schematischer Vereinfachung eine zu simulierende Dampfturbinenanlage 1 (nachfolgend kurz als Anlage 1 bezeichnet). Die Anlage 1 umfasst ein Ventil 2, einen Turbinenabschnitt 3 sowie eine Rohrleitung 4, die in Serie fluidisch miteinander verbunden sind und somit einen Fluidpfad FP für ein Arbeitsfluid F, insbesondere Heißdampf, bilden. Die Anlage 1 umfasst weiterhin einen dem Ventil 2 vorgeschalteten Dampferzeuger 5 sowie einen der Rohrleitung 4 nachgeschalteten Kondensator 6.

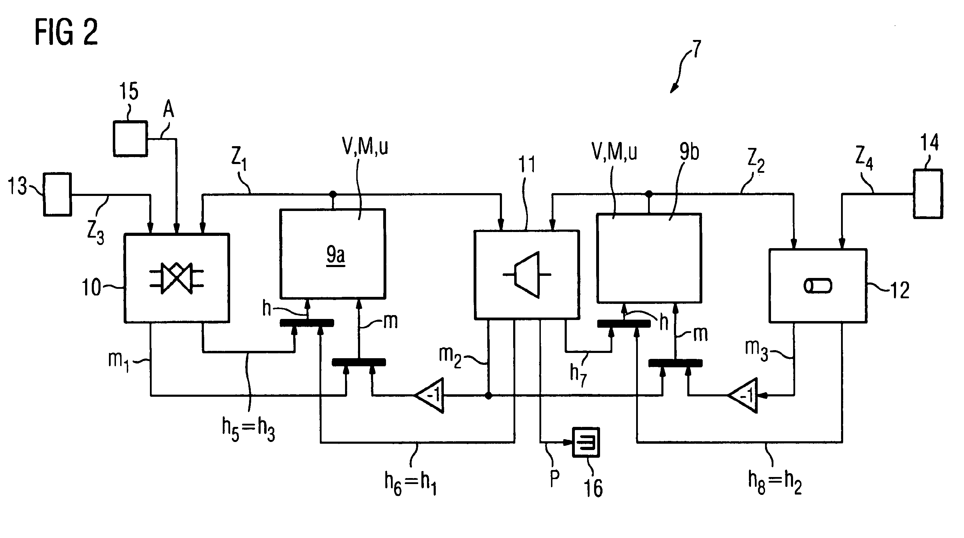

Zur Simulation des Betriebsverhaltens der Anlage 1 wird diese zunächst auf ein in FIG 2 dargestelltes Simulationsmodell 7 abgebildet. Zur Erstellung des Simulationsmodells 7 wird die reale Anlage 1 zunächst gegliedert in funktionale Anlagenelemente, die auf jeweils einen entsprechenden Modellbestandteil des Simulationsmodells 7 abgebildet werden sollen. Im Beispiel gemäß FIG 1 bilden das Ventil 2, der Turbinenabschnitt 3 und die Rohrleitung 4 jeweils ein solches Anlagenelement. Um das Betriebsverhalten der Anlage 1 im Zuge der Simulation ortsaufgelöst bestimmen zu können, wird die Anlage 1 weiterhin in eine Anzahl von Referenzvolumina 8a und 8b gegliedert, wobei jeweils ein Referenzvolumen 8a bzw. 8b zwei aneinander angrenzenden Anlagenelementen 2,3,4 zwischengeordnet ist. So ist das Referenzvolumen 8a dem Ventil 2 und dem Turbinenabschnitt 3, und das Referenzvolumen 8b dem Turbinenabschnitt 3 und der Rohrleitung 4 zwischengeordnet.

Im Gegensatz zu dem vereinfachten Beispiel gemäß FIG 1, bei welchem der Fluidpfad FP durch Hintereinanderschaltung der Anlagenelemente 2,3,4 linear ausgebildet ist, ist bei einer realen Dampfturbinenanlage der Fluidpfad FP in der Regel netzartig verzweigt. In Abbildung einer solchen komplexen Dampfturbinenanlage auf ein entsprechendes Simulationsmodell sind die Referenzvolumina insbesondere in den Knotenpunkten des Fluidpfades FP anzuordnen, während die ausgewählten Anlagenelemente jeweils eine Verbindung zwischen zwei solchen Knotenpunkten darstellen.

Jedes Referenzvolumen 8a,8b ist derart ausgewählt, dass im Betrieb der Anlage 1 innerhalb des Referenzvolumens 8a, 8b zu jedem Zeitpunkt ein im Rahmen der angestrebten Genauigkeit eindeutiger thermodynamischer Zustand vorliegt, der insbesondere durch wohlbestimmte thermodynamische Zustandsgrößen wie Temperatur, Druck, etc. charakterisiert ist.

In Abbildung der Anlage 1 auf das Simulationsmodell 7 wird jedem Referenzvolumen 8a, 8b der Anlage 1 ein Speicherelement 9a bzw. 9b zugeordnet. Jedes Speicherelement 9a, 9b ist ein Softwaremodul, dem eine Anzahl von Variablen und Konstanten als "Eigenschaften" zugeordnet ist. Diese "Eigenschaften" umfassen insbesondere ein konstantes virtuelles Volumen V, dessen Wert in Entsprechung mit dem zugeordneten Referenzvolumen 8a bzw. 8b gewählt ist. Des Weiteren sind jedem Speicherelement 9a,9b ein Masseninhalt M und spezifische innere Energie u ($u = U/M$) als Variablen zugeordnet. Jedem Speicherelement 9a,9b ist weiterhin ein virtueller thermodynamischer Zustand zugeordnet, der in Form eines Datenvektors $Z_i = \{p_i, v_i, h_i\}$ (nachfolgend als Zustandsvektor $Z_i$ bezeichnet) definiert ist. Der Zustandsvektor $Z_i$ umfasst als Komponenten den Druck $p_i$, das spezifische Volumen $v_i$ und die spezifische Enthalpie $h_i$ des entsprechenden Speicherelements 9a bzw. 9b. Der Zählindex i=1,2 bezeichnet hierbei die Zuordnung des Zustands

$Z_i$ und seiner Komponenten $p_i, v_i$ und $h_i$ zu dem jeweiligen Speicherelement 9a bzw. 9b, wobei mit i=1 bezeichnete Größen dem Speicherelement 9a und mit i=2 bezeichnete Größen dem Speicherelement 9b zugeordnet sind.

Jedem Anlagenelement 2,3,4 ist seitens des Simulationsmodells 7 eine zugehörige und für das jeweilige Anlagenelement 2,3 bzw. 4 spezifische Durchflussfunktion zugeordnet, die durch ein entsprechendes, nachfolgend als Durchflussmodul 10,11,12 bezeichnetes Softwaremodul implementiert ist. Jedes Durchflussmodul 10,11,12 berechnet in Abhängigkeit der thermodynamischen Zustände an den Moduleingängen einen für das jeweilige Durchflussmodul 10,11,12 charakteristischen Massenstrom $m_i$ (i=1, 2 ,3) sowie gegebenenfalls eine durch das simulierte Anlagenelement 2,3,4 verursachte Enthalpieänderung. Wird durch das simulierte Anlagenelement keine nennenswerte Änderung der Totalenthalpie verursacht, wie dies aufgrund der adiabatischen Zustandsänderungen im vorliegenden Beispiel für das Ventil 2 und die Rohrleitung 4 der Fall ist, so gibt das zugeordnete Durchflussmodul 10 bzw. 12 zusammen mit dem berechneten Massenstrom $m_i$ (mit i=1 für das Durchflussmodul 10, und i=3 für das Durchflussmodul 12) die dementsprechend konstante Enthalpie $h_i$ (mit i=5 für für das Durchflussmodul 10, und i=8 für das Durchflussmodul 12) an das jeweils benachbarte Speicherelement 9a bzw. 9b ab. Im Gegensatz dazu wird durch das Durchflussmodul 11 die durch den Turbinenabschnitt 3 verursachte Enthalpieänderung berücksichtigt. Das Durchflussmodul 11 gibt deshalb neben dem berechneten Massenstrom $m_2$ die am Turbineneingang vorliegende Enthalpie $h_6$ an das vorgeschaltete Speicherelement 9a, und die am Turbinenausgang vorliegende Enthalpie $h_7$ an das nachgeschaltete Speicherelement 9b aus. Die Durchflussmodule 10,11,und 12 sind in der Regel nicht für eine feste Durchflussrichtung ausgelegt. Vielmehr wird die Flussrichtung anhand des Druckgefälles an den Moduleingängen flexibel bestimmt.

Jedes Speicherelement 9a,9b gibt den zugehörigen Zustandsvektor $Z_1$, $Z_2$ als Eingangszustand an die benachbarten Durchflussmodule 10 und 11 bzw. 11 und 12 ab. Das Durchflussmodul 11 erhält also beispielsweise den Zustandsvektor $Z_1$ des vorgeschalteten Speicherelements 9a und den Zustandsvektor $Z_2$ des nachgeschalteten Speicherelements 9b als Eingangszustände.

Um für die Simulation definierte Randbedingungen zu schaffen, wird dem ersten Durchflussmodul 10 durch ein Initialmodul 13, das die modellhafte Abbildung des Dampferzeugers 5 darstellt, ein vorgegebener Zustand $Z_3 = \{p_3, v_3, h_3\}$ als Eingangszustand zugeführt. Entsprechend ist dem letzten Durchflussmodul 12 durch ein Endmodul 14, das den Kondensator 6 abbildet, ein Zustand $Z_4 = \{p_4, v_4, h_4\}$ zugeführt. Bei der nach FIG 1 von dem Dampferzeuger 5 in Richtung auf den Kondensator 6 gerichteten Strömungsrichtung des Arbeitsfluids F gelten für die Werte der Enthalpien $h_i$ die Gleichungen $h_5 = h_3$, $h_6 = h_1$ und $h_8 = h_2$.

Weiterhin wird dem ersten Durchflussmodul 10 durch ein Steuermodul 15 eine Steuergröße A (in der Dimension einer Fläche) zugeführt, durch welche ein variabler Öffnungsgrad des simulierten Ventils 2 vorgegeben ist. Das Durchflussmodul 11 gibt weiterhin ein der Turbinenleistung P entsprechendes Ausgabesignal an ein Ausgabemodul 16 ab.

Zu Beginn einer Simulationsphase wird jedem Speicherelement 9a,9b sowie dem Initialmodul 13 und Endmodul 14 vorgegebene Zustände $Z_1$ bis $Z_4$ als Anfangsbedingungen vorgegeben. In einem ersten Simulationsschritt wird nun durch jedes Durchflussmodul 10,11,12 der entsprechende Massenstrom $m_i$ und die entsprechende Enthalpie $h_i$ (i=5-8) berechnet und dem bzw. den benachbarten Speicherelementen 9a und/oder 9b zugeführt. Für jedes Speicherelement 9a,9b wird hierauf in nachfolgend näher beschriebener Weise ein aktualisierter Zustand $Z_1$ bzw. $Z_2$ als jeweiliger Ausgabezustand berechnet und den benachbarten Durchflussmodulen 10,11 bzw. 12 wiederum zur Verfügung gestellt.

In einem nachfolgenden Simulationsschritt wird der vorstehend beschriebene Vorgang wiederholt, indem die vorher berechneten Ausgabezustände $Z_1, Z_2$ wiederum als Anfangsbedingungen des weiteren Simulationsschritts herangezogen werden. Dieser Prozess wird über eine vorgegebene Anzahl von Simulationsschritten iterativ bis zum Ende der Simulationsphase wiederholt. Die vorgegebenen Randzustände $Z_3$ bzw. $Z_4$ können wahlweise, je nach der beabsichtigten Simulationssituation, während der gesamten Simulationsphase konstant gehalten oder im Verlauf der aufeinander folgenden Simulationsschritte variiert werden. Die Simulationsbedingungen können weiterhin durch Variation der Steuergröße A beeinflusst werden. Aus Gründen der physikalischen Konsistenz werden nur physikalisch sinnvolle Randzustände $Z_3$ und $Z_4$ vorgegeben. Ebenso erfolgt eine Variation der Randzustände $Z_3$ und $Z_4$ sowie der Steuergröße A nur stetig mit der Simulationszeit.

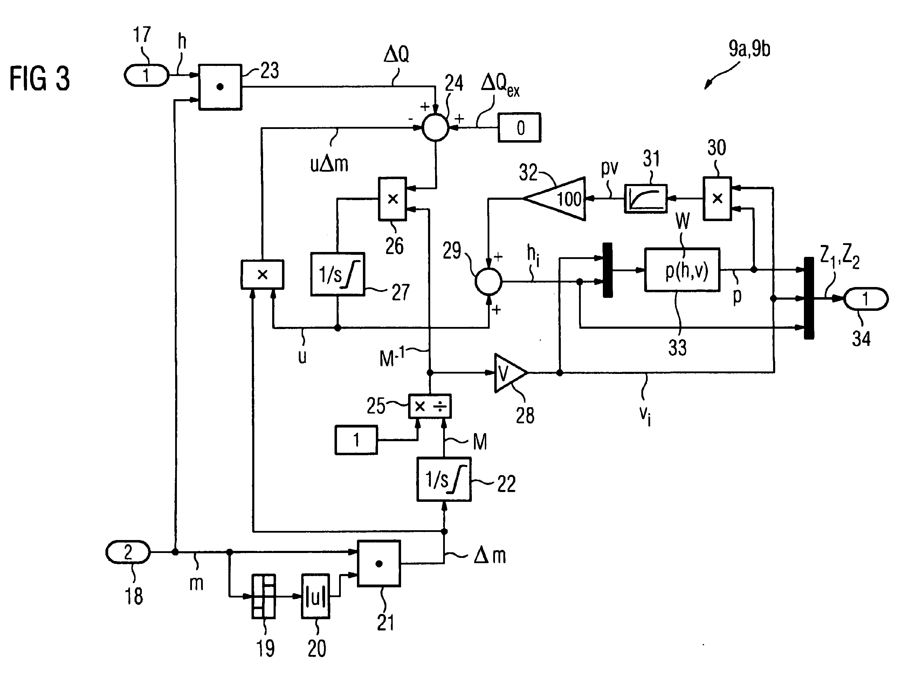

Die Struktur und Funktionsweise eines jeden der beiden Speicherelemente 9a und 9b ist in FIG 3 in einem Blockschaltbild näher dargestellt. Jedes Speicherelement 9a, 9b weist, wie auch schon aus FIG 2 ersichtlich, zwei Dateneingänge 17 und 18 auf. Über den ersten Dateneingang 17 wird dem Speicherelement 9a, 9b ein Vektor h (nachfolgend als Enthalpievektor h bezeichnet) zugeführt, der als Komponenten die von den benachbarten Durchflussmodulen 10,11 bzw. 12 jeweils ausgegebenen Enthalpien $h_i$ (i=5-8) enthält. Für das Speicherelement 9a gilt gemäß FIG 2 somit $h = \{h_5, h_6\}$, für das Speicherelement 9b entsprechend $h = \{h_7, h_8\}$.

Über den Dateneingang 18 wird dem jeweiligen Speicherelement 9a, 9b ein Vektor m (nachfolgend als Massenvektor m bezeichnet) zugeführt, der die von den benachbarten Modulen 10,11,12 jeweils berechneten Massenströme $m_i$ enthält. Für das Speicherelement 9a gilt hier $m = \{m_1, m_2\}$, für das Speicherelement 9b gilt entsprechend $m = \{m_2, m_3\}$.

Innerhalb eines jeden Speicherelements 9a, 9b wird zunächst durch Module 19,20 und 21 die Nettomassenänderung Am während des aktuellen Simulationsschritts bestimmt, indem die Komponenten des Massenvektors m aufsummiert werden. Technisch ist dies realisiert durch Skalarmultiplikation (Modul 21) des Massenvektors m mit einem Einheitsvektor, der eine der Anzahl der Komponenten des Massenvektors m entsprechende Zahl von Komponenten des Werts 1 enthält. Der Einheitsvektor wird erzeugt durch komponentenweise Anwendung einer Signum-Funktion (Modul 19) auf den Massenvektor m und anschließende komponentenweise Absolutwertbildung (Modul 20). Durch diesen numerischen Trick ist das Speicherelement 9a, 9b zur Aufnahme einer variablen Anzahl von Massenströmen $m_1$, d.h. zur Verarbeitung von Massenvektoren mit beliebiger Komponentenanzahl verallgemeinert.

Die aus dem Modul 21 resultierende Nettomassenänderung $\Delta m$ wird einem Integrator 22 zugeführt, der den hinterlegten bisherigen Masseninhalt M durch Addition mit der Nettomassenänderung $\Delta m$ aktualisiert. Die durch die Module 19 bis 22 durchgeführte Massenanpassung ist somit äquivalent mit der Formel

$$m \circ \vec{1} = \sum_{j \in J} m_j \cdot \underbrace{\left| sign(m_j) \right|}_{=1!} + M \rightarrow M \qquad \text{GLG 1}$$

wobei der Pfeiloperator "->" für eine Wertzuweisung an die Variable M steht. Für das Speicherelement 9a ist $J=\{1,2\}$, für das Speicherelement 9b ist $J=\{2,3\}$. Der Summenterm in GLG 1 entspricht einer einfachen Summe der einzelnen Massenströme $m_j$.

Aus dem Enthalpievektor h und dem Massenvektor m wird andererseits durch Skalarmultiplikation (Modul 23) die dem Speicherelement 9a,9b während des aktuellen Simulationsschrittes zu- bzw. abgeführte Nettowärme $\Delta Q$ berechnet. Diese wird addiert (Modul 24) mit einem zusätzlichen Wärmestrom $\Delta Q_{ex}$, durch welchen ein Wärmeverlust oder -gewinn durch Abstrahlung oder dgl. berücksichtigt wird. Die Addition umfasst einen weiteren Term $u\Delta m$, durch welchen der Einfluss der Nettomassenänderung $\Delta m$ auf die Änderung der spezifischen inneren Energie u berücksichtigt wird. Das Ergebnis wird mit dem invertierten Masseninhalt $M^{-1}$ multipliziert (Modul 26) und einem zweiten Integrator 27 zugeführt, der die spezifische innere Energie u des Speicherelements 9a,9b aktualisiert. Der durch die Module 23 bis 27 durchgeführte Algorithmus wird beschrieben durch die Formel

$$\left( h \circ m + \Delta Q_{ex} - u\Delta m \right) \cdot M^{-1} + u \rightarrow u \ . \qquad \text{GLG 2}$$

Aus dem Masseninhalt M wird durch Invertierung (Modul 25) und Multiplikation (Modul 28) mit dem Volumen V das spezifische Volumen $v_i$ (i=1,2) berechnet. Anstelle der spezifischen inneren Energie u kann alternativ durch die Speichereinheit 9a, 9b in einer nicht näher dargestellten Verfahrensvariante auch die absolute innere Energie $U = M \cdot u$ direkt berechnet werden. Die Änderung der absoluten inneren Energie pro Iterationsschritt ergibt sich aus der Summe $m \cdot h + \Delta Q_{ex}$.

Aus der inneren Energie u wird nach der Formel $h_i=u+p_iv_i$ durch ein Modul 29 die spezifische Enthalpie $h_i$ des jeweiligen Speicherelements 9a,9b berechnet. Das durch ein Modul 30 gebildete Produkt pv aus Druck $p_i$ (i=1,2) und spezifischem Volumen $v_i$ wird hierzu durch ein der Auflösung einer algebraischen Schleife dienendes Verzögerungsmodul 31 aus dem vorangegangenem Simulationsschritt zurückbehalten und dem Modul 29 zur Verfügung gestellt. Ein dem Verzögerungsmodul 31 und dem Modul 29 zwischengeschaltetes Proportionalmodul 32 dient zur Umrechnung des Produkts pv in SI-Einheiten. Zur Berechnung des Drucks $p_i$ wird die durch das Modul 29 berechnete Enthalpie $h_i$ und das durch das Modul 28 berechnete spezifische Volumen $v_i$ einem Modul 33 zugeführt. Das Modul 33 ermittelt den Druck $p_i$ unter Rückgriff auf eine hinterlegte Wasserdampftafel W.

Der Druck $p_i$, das spezifische Volumen $v_i$ und die Enthalpie $h_i$ werden zu dem Zustandsvektor $Z_i$ des jeweiligen Speicherelements 9a,9b zusammengefasst und über einen Datenausgang 34 ausgegeben.

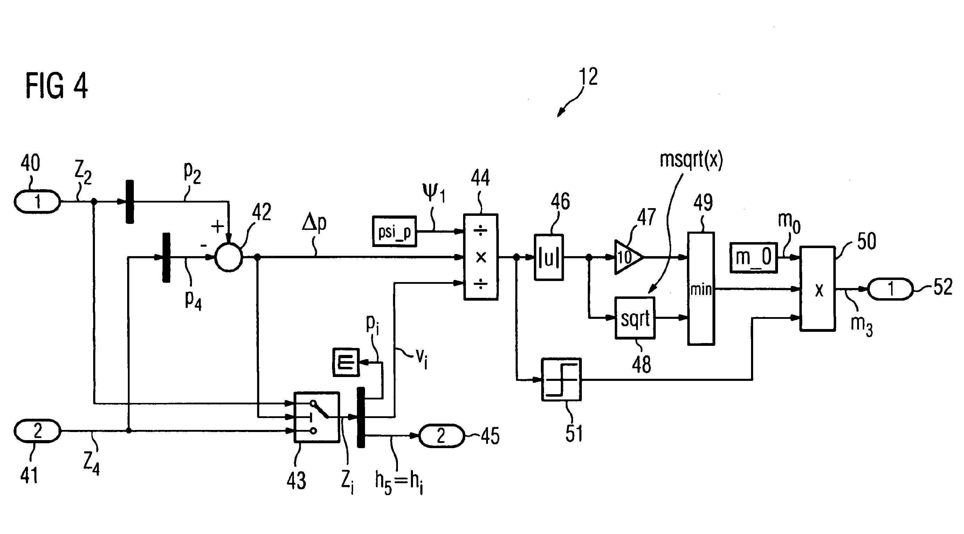

In FIG 4 ist die Struktur und Funktionsweise des die Rohrleitung 4 simulierenden Durchflussmoduls 12 dargestellt. Dem Durchflussmodul 12 wird über einen ersten Dateneingang 40 der von dem Speicherelement 9b ausgegebene Zustandsvektor $Z_2$ zugeführt. Über einen zweiten Dateneingang 41 wird dem Durchflussmodul 12 der von dem Endmodul 14 ausgegebene Zustandsvektor $Z_4$ zugeführt. Aus dem Zustandsvektor $Z_2$ und $Z_4$ werden die entsprechenden Drücke $p_2$ bzw. $p_4$ extrahiert und einem Modul 42 zugeführt, welches die Druckdifferenz $\Delta p$ ermittelt. Die Zustandsvektoren $Z_2$ und $Z_4$ werden weiterhin einem Schaltmodul 43 zugeführt, welches entsprechend dem Vorzeichen der Druckdifferenz $\Delta p$ alternativ den mit dem höheren Druck $p_i$ behafteten Zustand $Z_i$ (i=2,4) zuschaltet.

Infolge des Schaltmoduls 43 ist das Durchflussmodul 12 zur Simulation einer bidirektionalen Strömung durch die Rohrleitung 4 ausgebildet, bei welchem - analog zu der realen Rohrleitung 4 - die Strömungsrichtung des Arbeitsfluids F stets in Richtung der Druckgefälles gerichtet ist. In FIG 4 ist der Regelfall dargestellt, in welchem der Druck $p_2$ in dem Referenzvolumen 8b den Druck $p_4$ in dem Endmodul 14 übersteigt und somit das Arbeitsfluid F von dem Referenzvolumen 8b in Richtung des Kondensators 6 strömt.

Der von dem Schaltmodul 43 ausgegebene Zustandsvektor $Z_i$ (gemäß FIG 4: i=2) wird komponentenweise aufgegliedert. Hierbei wird das spezifische Volumen $v_i$ einem Modul 44 zugeführt. Die Enthalpie $h_i$ wird über einen Datenausgang 45 ausgegeben.

Durch das Modul 44 wird die Druckdifferenz $\Delta p$ durch das spezifische Volumen $v_i$ und eine als Auslegungsdurchfluss $\Psi_1$ bezeichnete, für das Durchflussmodul 12 spezifische Konstante dividiert. $\Psi_1$ ist hierbei abhängig von dem Auslegungszustand. Von dem Ergebnis wird der Absolutwert (Modul 46) und die Quadratwurzel (Module 47,48 und 49) gebildet. Die Module 47 bis 49 stellen hierbei eine numerisch stabilisierte Wurzelfunktion msqrt(x) zur Verfügung, die in TAB 2 näher definiert ist.

Das Ergebnis wird durch ein Modul 50 mit einer als Auslegungsmassenstrom $m_0$ bezeichneten Konstante und dem von einem Modul 51 zur Verfügung gestellten Vorzeichen der Druckdifferenz $\Delta p$ zur Ermittlung des Massenstroms $m_3$ multipliziert. Der Massenstrom $m_3$ wird über einen Datenausgang 52 ausgegeben.

Der durch die Durchflussgleichung 12 ausgeführte Algorithmus ist somit äquivalent zur der Formel

$$m_3 = m_0 \cdot sign\left(\frac{p_2 - p_1}{\psi_1 \cdot v_j}\right) \cdot msqrt\left(\left|\frac{p_2 - p_1}{\psi_1 \cdot v_j}\right|\right) \qquad \text{GLG 3}$$

mit j=2, wenn $p_2 > p_i$, sonst j=1.

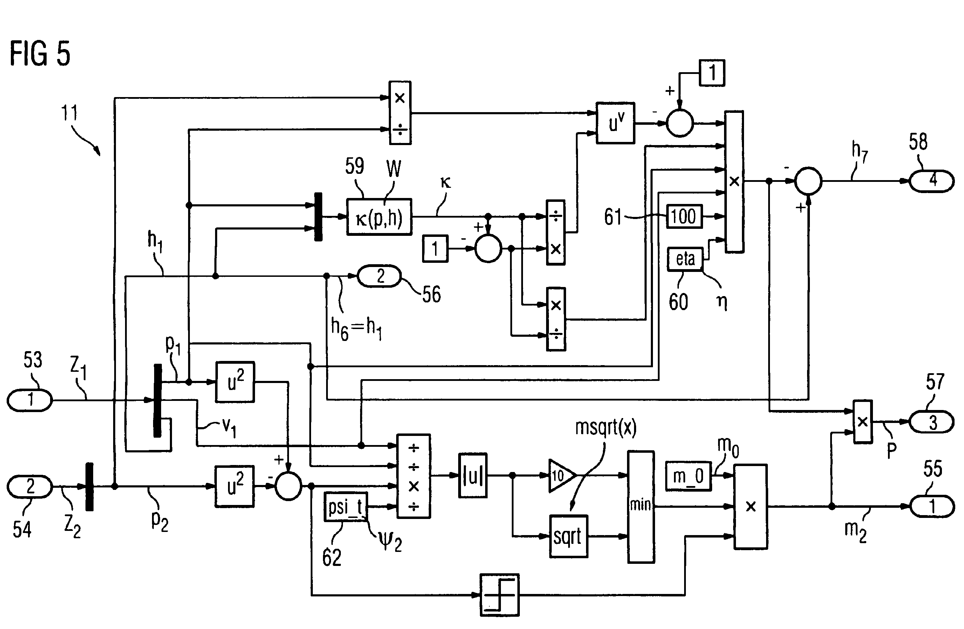

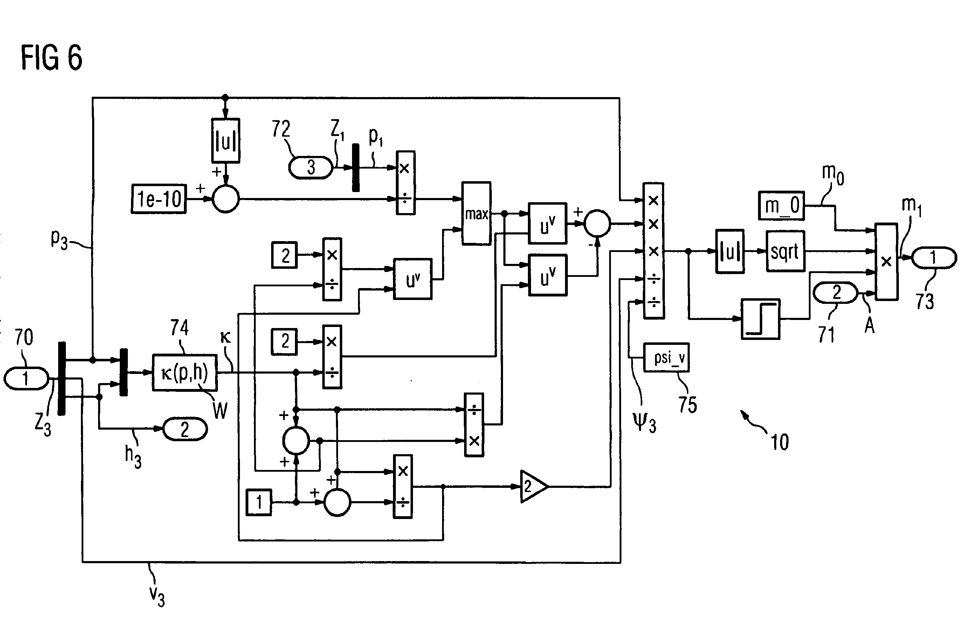

In analoger Weise sind in den FIG 5 und 6 die Struktur und Funktionsweise der Durchflussmodule 11 bzw. 10 dargestellt, die den Fluss durch den Turbinenabschnitt 3 bzw. den Fluss durch das Ventil 2 simulieren.

Dem Durchflussmodul 11 sind über Dateneingänge 53 und 54 die Zustandsvektoren $Z_1$ bzw. $Z_2$ zugeführt. Das Durchflussmodul 11 gibt über einen ersten Datenausgang 55 den Massenstrom $m_2$ aus. Über einen zweiten Datenausgang 56 wird die Enthalpie $h_6$ ausgegeben, deren Wert - wie vorstehend bereits ausgeführt - der Enthalpie $h_1$ des Zustandsvektors $Z_1$ entspricht. Über einen dritten Datenausgang 57 gibt das Durchflussmodul 11 die Turbinenleistung P aus. Über einen vierten Datenausgang 58 wird die von dem Durchflussmodul 11 berechnete Enthalpie $h_7$ ausgegeben. Die Berechnung der Enthalpie $h_7$ folgt hierbei nach der in FIG 5 symbolisch dargestellten Formel

$$h_7 = h_1 - 100 \cdot p_1 \cdot v_1 \cdot \eta \cdot \left[1 - \left(\frac{p_2}{p_1}\right)^{(\kappa-1)/\kappa}\right] \cdot \frac{\kappa}{\kappa - 1} \qquad \text{GLG 4}$$

Hierbei wird der Isentropenexponent $\kappa$ von Wasserdampf durch ein Modul 59 unter Heranziehung der hinterlegten Wasserdampftafel W in Abhängigkeit des Drucks $p_1$ und der Enthalpie $h_1$ berechnet. Der in GLG 4 eingehende isentrope Wirkungsgrad $\eta$ der Turbine wird durch ein Modul 60 als Konstante zur Verfügung gestellt. Eine weitere, durch ein Modul 61 zur Verfügung gestellte Konstante des Werts 100 dient wiederum zur Umrechnung des zweiten Differenzterms in GLG 1 in SI-Einheiten.

Die Berechnung des Massenstroms $m_2$ erfolgt nach der in FIG 5 symbolisch dargestellten Formel

$$m_2 = m_0 \cdot sign\left(p_1{}^2 - p_2{}^2\right) \cdot msqrt\left(\left|\frac{p_1{}^2 - p_2{}^2}{v_1 \cdot p_1 \cdot \psi_2}\right|\right) \cdot \qquad \text{GLG 5}$$

Durch ein Modul 62 wird hierbei wiederum ein für das Durchflussmodul 11 und die Auslegungszustände spezifischer Auslegungsdurchfluss $\psi_2$ als Konstante zur Verfügung gestellt.

Die Berechnung der Turbinenleistung P erfolgt nach der in FIG 5 symbolisch dargestellten Formel

$$P = 100 \cdot m_2 \cdot p_1 \cdot v_1 \cdot \eta \cdot \left[1 - \left(\frac{p_2}{p_1}\right)^{(\kappa-1)/\kappa}\right] \cdot \frac{\kappa}{\kappa - 1} \qquad . \qquad \text{GLG 6}$$

Der Massenstrom $m_2$ berechnet sich hierbei gemäß GLG 5.

Dem in FIG 6 dargestellten Durchflussmodul 10 wird über einen Dateneingang 70 der Zustandsvektor $Z_3$ zugeführt. Über einen zweiten Dateneingang 71 erhält das Durchflussmodul 10 die Steuergröße A. Über einen dritten Dateneingang 73 ist der Zustandsvektor $Z_1$ zugeführt.

Das Durchflussmodul 10 gibt den berechneten Massenstrom $m_1$ über einen ersten Datenausgang 73 aus. Die Berechnung des Massenstromes $m_1$ erfolgt hierbei nach der in FIG 6 symbolisch dargestellten Formel

$$m_1 = m_0 \cdot A \cdot sign(Y) \cdot sqrt(|Y|) \quad , \quad \text{mit} \qquad \text{GLG 7}$$

$$Y = \frac{2 \cdot p_3 \cdot \left((X)^{2/\kappa} - (X)^{(\kappa+1)/\kappa}\right)}{v_3 \cdot \psi_3} \cdot \frac{\kappa}{\kappa - 1}$$

$$X = \max\left(\frac{p_1}{|p_3| + 10^{-10}} ; \frac{2}{\kappa + 1}^{\kappa/(\kappa-1)}\right)$$

Die hierin enthaltene Isentropenexponent $\kappa$ wird durch ein Modul 74 wiederum anhand der Wasserdampftafel W in Abhängigkeit des Drucks $p_3$ und der Enthalpie $h_3$ ermittelt. In GLG 7 geht wiederum ein für das Durchflussmodul 10 und den Auslegungszustände spezifischer Auslegungsdurchfluss $\psi_3$ als Konstante ein, der durch ein Modul 75 bereitgestellt wird.

| Symbol | Beschreibung | Beispiel | Formeläquivalent |
|---|---|---|---|
| (i) → x | Dateneingang Nr. i für Variable x | | |
| x → (i) | Datenausgang Nr. i für Variable x | | |
| [...] → x | Erzeugung einer Konstante x | [1] → x  [eta] → x | $x \to 1$ (direkte Wert-zuweisung) $x \to$ eta (Verweis auf hinterlegte Konstante) |
| x → [f] → y  x1 → [f] → y, x2 → | Mathematische Funktion $y = f(x)$ bzw. $y = f(x1, x2, \ldots)$ | x → [sqrt] → y  x1 → [$u^v$] → y, x2 →  x → [⌐] → y | $y = \mathrm{sqrt}(x) = x^{1/2}$  $y = (x1)^{x2}$  $y = \mathrm{sign}(x)$ |
| x1 → (+ +) → y, x2 → | Addition, Subtraktion | x1 → (+ +) → y, x2 →  x1 → (+ -) → y, x2 → | $y = x1 + x2$  $y = x2 - x1$ |
| x1 → [× ÷] → y, x2 → | Multiplikation, Division | x1 → [× ×] → y, x2 →  x1 → [× ÷] → y, x2 → | $y = x1 \cdot x2$  $y = x1 / x2$ |
| x → [p⟩ → y | Proportionalmodul, $y = p \cdot x$ | x → [2⟩ → y | $y = 2x$ |
| x1 →, x2 → ▌ → v | Vektorisierung, $x1, x2 \to v = \langle x1, x2\rangle$ | | |
| v → ▌ → x1, → x2 | Devektorisierung, $v = \langle x1, x2\rangle \to x1, x2$ | | |
| x → [$1/_s\int$] → y | Integrator, $y + x \to y$ | | |

TAB 1: Verwendete Symbole

TAB 2: Verwendete mathematische Funktionen

| Zeichen | Beschreibung | Formel |
|---|---|---|
| sqrt, sqrt(x) | Quadratwurzel | $x^{1/2}$ |
| max, max(x;y) | Maximalfunktion | X, wenn x > y<br>y sonst |
| min, min(x;y) | Minimalfunktion | X, wenn x < y<br>y sonst |
| msqrt, msqrt (x) | Modifizierte Quadratwurzel | min (sqrt (x) ;10·x) |
| sign, sign(x) | Signum-Funktion | 1, wenn x > 0<br>0, wenn x = 0<br>-1 sonst |

**Patentansprüche**

1. Verfahren zur Simulation des Betriebsverhaltens einer Dampfturbinenanlage (1),

   - bei welchem die Dampfturbinenanlage (1) in mindestens zwei Anlagenelemente (2,3,4) und mindestens ein Referenzvolumen (8a,8b) gegliedert wird, so dass zwei aneinander angrenzenden Anlagenelementen (2,3;3,4) mindestens ein Referenzvolumen (8a;8b) zwischengeschaltet ist,
   - bei welchem jedem Referenzvolumen (8a,8b) ein Speicherelement (9a,9b) für Masse und Energie zugeordnet wird, das einen anhand eines vorgegebenen Sets thermodynamischer Größen ($p_i$, $v_i$, $h_i$; i=1,2) definierten zeitabhängigen thermodynamischen Zustand ($Z_i$; i=1,2) aufweist,
   - bei welchem dem oder jedem Anlagenelement (2,3,4) eine Durchflussfunktion (10,11,12) zur Ermittlung eines Massenstroms ($m_i$;i=1-3) und zur Ermittlung der Enthalpie ($h_i$ ; i=5-8) am Ein- und Austritt des Anlagenelements (2,3,4) zugeordnet wird,

   wobei im Zuge einer Simulationsphase für jedes Speicherelement (9a, 9b) ausgehend von vorgegebenen Anfangsbedingungen anhand der Durchflussfunktionen (10,11,12) der Masseninhalt (M) und die innere Energie (u) ermittelt und hieraus ein Ausgabezustand berechnet wird.

2. Verfahren nach Anspruch 1,
   **gekennzeichnet durch** eine Rohrleitung (4) als Anlagenelement.

3. Verfahren nach Anspruch 1 oder 2,
   **gekennzeichnet durch** ein Ventil (2) als Anlagenelement.

4. Verfahren nach einem der Ansprüche 1 bis 3,
   **gekennzeichnet durch** einen Turbinenabschnitt (3) als Anlagenelement.

5. Verfahren nach einem der Ansprüche 1 bis 4,
   **dadurch gekennzeichnet, dass** der thermodynamische Zustand ($Z_i$; i=1, 2) eines jeden Speicherelements (9a,9b) durch die Größen Druck ($p_i$), Enthalpie ($h_i$) und spezifisches Volumen ($v_i$) definiert wird.

6. Verfahren nach einem der Ansprüche 1 bis 5,
   **dadurch gekennzeichnet, dass** der Ausgabezustand eines jeden Speicherelements (9a, 9b) unter Heranziehung einer Wasserdampftafel (W) berechnet wird.

7. Verfahren nach einem der Ansprüche 1 bis 6,
   **dadurch gekennzeichnet, dass** die Simulationsphase mehrere iterativ nacheinander ausgeführte Simulationsschritte umfasst, wobei die für die Speicherelemente (9a,9b) berechneten Ausgabezustände eines zeitlich vorangehenden Simulationsschrittes als Anfangsbedingungen eines zeitlich nachfolgenden Simulationsschrittes herangezogen werden.

**Claims**

1.  Method for simulating the operational performance of a steam turbine plant (1),

    - in the case of which the steam turbine plant (1) is divided into at least two plant elements (2, 3, 4) and at least one reference volume (8a, 8b) so that at least one reference volume (8a; 8b) is interposed between two mutually adjacent plant elements (2, 3; 3, 4),
    - in the case of which each reference volume (8a, 8b) is assigned a storage element (9a, 9b) for mass and energy, which storage element exhibits a time-dependent thermodynamic state ($Z_i$; i = 1.2) defined with the aid of a prescribed set of thermodynamic variables ($p_i$, $v_i$, $h_i$; i = 1.2), and
    - in the case of which the or each plant element (2, 3, 4) is/are assigned a flow function (10, 11, 12) for determining a mass flow ($m_i$; i = 1-3) and for determining the enthalpy (hi; i = 5-8) at the inlet and outlet of the plant element (2, 3, 4),

    the mass content (M) and the internal energy (u) being determined in the course of a simulation phase for each storage element (9a, 9b) starting from prescribed initial conditions with the aid of the flow functions (10, 11, 12), and an output state being calculated therefrom.

2.  Method according to Claim 1, **characterized by** a pipeline (4) as plant element.

3.  Method according to Claim 1 or 2, **characterized by** a valve (2) as plant element.

4.  Method according to one of Claims 1 to 3, **characterized by** a turbine section (3) as plant element.

5.  Method according to one of Claims 1 to 4, **characterized in that** the thermodynamic state ($Z_i$; i = 1.2) of each storage element (9a, 9b) is defined by the variables of pressure ($p_i$), enthalpy ($h_i$) and specific volume ($v_i$).

6.  Method according to one of Claims 1 to 5, **characterized in that** the output state of each storage element (9a, 9b) is calculated with the aid of a steam table (W).

7.  Method according to one of Claims 1 to 6, **characterized in that** the simulation phase comprises a plurality of simulation steps sequentially executed iteratively, the output states, calculated for the storage elements (9a, 9b), of a temporally preceding simulation step being used as initial conditions of a temporally subsequent simulation step.

**Revendications**

1.  Procédé de simulation des caractéristiques de fonctionnement d'une installation ( 1 ) de turbine à vapeur,

    - dans lequel on subdivise l'installation ( 1 ) de turbine à vapeur en au moins deux éléments ( 2, 3, 4 ) d'installation et en au moins un volume ( 8a, 8b ) de référence, de manière à ce qu'au moins un volume ( 8a, 8b ) de référence soit interposé entre deux éléments ( 2, 3 ; 3, 4 ) d'installation voisins l'un de l'autre,
    - dans lequel, à chaque volume ( 8a, 8b ) de référence, on associe un élément ( 9a, 9b ) d'accumulation de masse et d'énergie, qui a un état ( $z_i$ ; i = 1, 2 ) thermodynamique dépendant du temps et défini au moyen d'un jeu prescrit de grandeurs ( $p_i$, $v_i$, $h_i$ ; i = 1, 2 ) thermodynamiques,
    - dans lequel, à l'élément ou à chaque élément ( 2, 3, 4 ) d'installation, on associe une fonction ( 10, 11, 12 ) de débit, pour la détermination d'un courant ( $m_i$ ; i = 1 à 3 ) massique et pour la détermination de l'enthalpie ( hi ; i = 5 à 8 ) à l'entrée et à la sortie de l'élément ( 2, 3, 4 ) d'installation,

    dans lequel, au cours d'une phase de simulation, on détermine, pour chaque élément ( 9a, 9b ) d'accumulation à partir de conditions initiales prescrites et au moyen des fonctions ( 10, 11, 12 ) de débit, la teneur ( M ) massique et l'énergie ( u ) interne et on en calcule un état de sortie.

2.  Procédé suivant la revendication 1,
    **caractérisé par** une canalisation ( 4 ) comme élément d'installation.

3.  Procédé suivant la revendication 1 ou 2,
    **caractérisé par** une vanne ( 2 ) comme élément d'installation.

**4.** Procédé suivant l'une des revendications 1 à 3,
**caractérisé par** une partie ( 3 ) de turbine comme élément d'installation.

**5.** Procédé suivant l'une des revendications 1 à 4,
**caractérisé en ce qu'**on définit l'état ( $z_i$ ; i = 1, 2 ) thermodynamique de chaque élément ( 9a, 9b ) d'accumulation par les grandeurs pression ( $p_i$ ), enthalpie ( $h_i$ ) et volume ( $v_i$ ) spécifique.

**6.** Procédé suivant l'une des revendications 1 à 5,
**caractérisé en ce qu'**on calcule l'état de sortie de chaque élément ( 9a, 9b ) d'accumulateur en faisant appel à une table ( W ) de vapeur d'eau.

**7.** Procédé suivant l'une des revendications 1 à 6,
**caractérisé en ce que** la phase de simulation comprend plusieurs stades de simulation exécutés les uns après les autres de manière itérative, les états de sortie calculés pour les éléments ( 9a, 9b ) d'accumulation d'un stade de simulation précédent dans le temps étant pris comme conditions initiales d'un stade de simulation suivant dans le temps.

FIG 1

EP 1 647 676 B1

FIG 2

EP 1 647 676 B1

FIG 3

EP 1 647 676 B1

FIG 4

EP 1 647 676 B1

FIG 5

## FIG 6

**EP 1 647 676 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20040073409 A1